# EUROPÄISCHE PATENTANMELDUNG

(11) **EP 4 614 807 A1**
(43) Veröffentlichungstag der Anmeldung: **10.09.2025**
(21) Anmeldenummer: 24161516.0
(22) Anmeldetag: 05.03.2024
(51) Int. Cl.: H02S 20/26, H02S 30/10

(54) **PHOTOVOLTAIKMODUL, FASSADENSYSTEM, FASSADE SOWIE VERWENDUNG DES PHOTOVOLTAIKMODULS**

(71) Anmelder: STO SE & Co. KGaA, 79780 Stühlingen (DE)
(72) Erfinder: Glisic, Bojan, 9524 Villach (AT); Stoll, Christian, 79771 Klettgau (DE); Hahn, Conny, 78176 Blumberg (DE); Wiedemann, Robert, 86735 Amerdingen (DE)
(74) Vertreter: Gottschalk, Matthias

(57) **Zusammenfassung**

Die Erfindung betrifft ein Photovoltaikmodul (1) für ein Fassadensystem (2) zur Ausbildung einer vorgehängten hinterlüfteten Fassade, umfassend ein Photovoltaikelement (10) mit einem mehrschichtigen Aufbau sowie einen Rahmen (20) zur Aufnahme des Photovoltaikelements (10), der eine Vorderseite (21) und eine Rückseite (22) aufweist, wobei im Bereich der Vorderseite (21) des Rahmens (20) das Photovoltaikelement (10) aufgenommen ist und im Bereich der Rückseite (22) des Rahmens (20) eine Platte (30) angeordnet und mit dem Rahmen (20) verbunden ist, so dass das Photovoltaikelement (10), der Rahmen (20) und die Platte (30) gemeinsam einen Hohlraum (40) umschließen.

Die Erfindung betrifft ferner ein Fassadensystem (2) mit einem erfindungsgemäßen Photovoltaikmodul (1), eine aus dem Fassadensystem (1) ausgebildete vorgehängte hinterlüftete Fassade sowie eine Verwendung des erfindungsgemäßen Photovoltaikmoduls (1) als Fassadenelement.

## Beschreibung

Die Erfindung betrifft ein Photovoltaikmodul für ein Fassadensystem zur Ausbildung einer vorgehängten hinterlüfteten Fassade. Des Weiteren betrifft die Erfindung ein Fassadensystem zur Ausbildung einer vorgehängten hinterlüfteten Fassade, umfassend ein erfindungsgemäßes Photovoltaikmodul sowie eine aus dem Fassadensystem ausgebildete vorgehängte hinterlüftete Fassade. Darüber hinaus wird eine Verwendung des erfindungsgemäßen Photovoltaikmoduls vorgeschlagen.

### Stand der Technik

Mit Hilfe eines Photovoltaikmoduls kann Sonnenlicht in elektrische Energie gewandelt werden. Da diese Art der Energieerzeugung eine regenerative Energiequelle nutzt, leistet sie einen Beitrag zur Beschränkung des Klimawandels. Zudem ist Sonnenlicht kostenfrei, so dass die elektrische Energie vergleichsweise kostengünstig erzeugt werden kann.

Bekannt sind große Photovoltaikanlagen mit einer Vielzahl an Photovoltaikmodulen, die frei aufgestellt werden. Das freie Aufstellen erfordert jedoch große Freiflächen, die nicht immer verfügbar sind. Dies gilt insbesondere in dicht besiedelten Gebieten, wie Städten. Dort werden daher die Dachflächen von Gebäuden zum Aufstellen der Photovoltaikmodule genutzt. Immer häufiger werden Photovoltaikmodule auch vor Fassaden oder Balkone gehängt.

Soll ein Photovoltaikmodul in eine Fassade integriert bzw. als Fassadenelement verwendet werden, muss es ein Brandverhalten aufweisen, das den an Fassaden gestellten Brandschutzanforderungen entspricht. Das heißt insbesondere, dass das Photovoltaikmodul eine gewisse Zeit dem Brand bzw. der sich bei einem Brand entwickelnden Hitze standhalten muss. Dadurch soll u.a. verhindert werden, dass herabfallende Teile Personen in der Umgebung gefährden. Darüber hinaus sollte das Photovoltaikmodul nicht zu einer Brandausbreitung beitragen.

Um das Brandverhalten eines Photovoltaikmoduls zu bestimmen, werden in der Regel Brandversuche durchgeführt. Im Rahmen solcher Brandversuche hat sich gezeigt, dass die derzeit auf dem Markt erhältlichen Photovoltaikmodule nicht den einschlägigen Brandschutzanforderungen genügen. Dies gilt insbesondere für solche Module, die außenliegende Glasscheiben zum Schutz vor äußeren Einwirkungen aufweisen. Denn die sich beim Brand entwickelnde Hitze führt zum Zerbersten der Glasscheiben, so dass die dahinterliegenden Schichten nicht länger geschützt sind. Diese brennen dann durch und es kommt zu einem Branddurchschlag. Um dies zu verhindern, kann die Glasscheibe dicker ausgeführt werden, was jedoch zu einem höheren Gewicht des Photovoltaikmoduls führt. Alternativ kann ein Glas verwendet werden, das hitzebeständiger ist. Dadurch erhöhen sich jedoch die Kosten des Photovoltaikmoduls.

Die vorliegende Erfindung ist mit der Aufgabe befasst, ein Photovoltaikmodul anzugeben, das ein verbessertes Brandverhalten aufweist. Das Photovoltaikmodul soll dadurch in eine Fassade eines Gebäudes integrierbar sein. Zugleich soll das Photovoltaikmodul ein möglichst geringes Gewicht aufweisen und kostengünstig herstellbar sein.

Zur Lösung der Aufgabe wird das Photovoltaikmodul mit den Merkmalen des Anspruchs 1 vorgeschlagen. Vorteilhafte Weiterbildungen der Erfindung sind den Unteransprüchen zu entnehmen. Ferner werden ein Fassadensystem und eine vorgehängte hinterlüftete Fassade jeweils mit mindestens einem erfindungsgemäßen Photovoltaikmodul angegeben. Darüber hinaus wird eine Verwendung für das erfindungsgemäße Photovoltaikmodul angegeben.

### Offenbarung der Erfindung

Vorgeschlagen wird ein Photovoltaikmodul für ein Fassadensystem zur Ausbildung einer vorgehängten hinterlüfteten Fassade, umfassend ein Photovoltaikelement mit einem mehrschichtigen Aufbau sowie einen Rahmen zur Aufnahme des Photovoltaikelements, der eine Vorderseite und eine Rückseite aufweist. Im Bereich der Vorderseite des Rahmens ist das Photovoltaikelement aufgenommen und im Bereich der Rückseite des Rahmens ist eine Platte angeordnet und mit dem Rahmen verbunden, so dass das Photovoltaikelement, der Rahmen und die Platte gemeinsam einen Hohlraum umschließen.

Der Hohlraum ist im einfachsten Fall mit Luft gefüllt. Im Brandfall erwärmt sich die Luft und trägt so zu einer gleichmäßigen Erwärmung des Photovoltaikelements bei. Die gleichmäßige Erwärmung verhindert eine lokale Überhitzung des Photovoltaikmoduls, das dadurch länger dem Brand bzw. der Hitze standhält. Insbesondere kann ein Zerbersten einer außenliegenden Glasscheibe verhindert oder zumindest verzögert werden. Das vorgeschlagene Photovoltaikmodul weist somit ein verbessertes Brandverhalten auf, und zwar ohne eine Änderung an der Glasscheibe vornehmen zu müssen.

Abhängig vom Werkstoff der rückseitig angeordneten Platte kann auch diese zu einer gleichmäßigen Temperaturverteilung im Brandfall beitragen. Ferner kann mit Hilfe der Platte eine Aussteifung des Rahmens bewirkt werden, so dass dieser sich unter Hitzeeinwirkung nicht oder zumindest weniger stark verzieht. Dies hat ferner zur Folge, dass über den Rahmen keine zusätzlichen Spannungen in die Glasscheibe eingebracht werden, so dass hierüber die Hitzebeständigkeit der Glasscheibe steigt.

Gemäß einer bevorzugten Ausführungsform der Erfindung weist der Rahmen eine Tiefe auf, die größer als eine Tiefe des Photovoltaikelements ist. Der Rahmen fungiert demnach als Abstandshalter zwischen dem Photovoltaikelement und der Platte. Zusätzliche Abstandshalter sind somit entbehrlich, was wiederum Gewicht und Kosten einzusparen hilft.

Ferner bevorzugt ist das Photovoltaikelement durch den Rahmen umlaufend eingefasst. Die Seitenkanten des Photovoltaikelements sind dadurch optimal geschützt. Ferner ist das Photovoltaikelement über den Rahmen sicher gehalten. Der Rahmen kann hierzu ein- oder mehrteilig ausgeführt sein.

Im Fall der mehrteiligen Ausführung ist vorzugsweise das Photovoltaikelement zwischen zwei Rahmenteilen angeordnet. Über ein erstes Rahmenteil, das vorzugsweise hinter dem Photovoltaikelement angeordnet ist, kann dann das Gewicht des Photovoltaikelements ausgenommen werden. Das zweite Rahmenteil, das vorzugsweise vor dem Photovoltaikelement angeordnet ist, kann der umlaufenden Abdeckung des Kantenbereichs dienen. Über die Verbindung der beiden Rahmenteile kann dann das zwischenliegende Photovoltaikelement fixiert werden. Vorzugsweise wird das Photovoltaikelement zwischen den beiden Rahmenteilen eingeklemmt. Die beiden Rahmenteile können ebenfalls über eine Klemm- bzw. Clipverbindung und/oder über eine Schraubverbindung miteinander verbunden werden. Zumindest ein Rahmenteil, beispielsweise das erste bzw. hinter dem Photovoltaikelement angeordnete Rahmenteil, kann zur Aufnahme des Photovoltaikelements einen Falz aufweisen. Dieser ist vorzugsweise umlaufend ausgeführt, um die Seitenkanten des Photovoltaikelements optimal zu schützen.

Alternativ oder ergänzend wird vorgeschlagen, dass der Rahmen oder zumindest ein Rahmenteil des Rahmens eine Nut zur Aufnahme des Photovoltaikelements aufweist.

Die Nut ist innenseitig angeordnet und vorzugsweise ebenfalls umlaufend ausgebildet, so dass das Photovoltaikelement umlaufend in dieser Nut einsteht.

Bevorzugt ist der Rahmen aus Profilen gefertigt, die als Kammerprofile oder als offene Profile mit mindestens zwei winklig zueinander angeordneten Schenkeln ausgeführt sind. Der Rahmen weist dadurch eine hohe Formsteifigkeit bei zugleich geringem Gewicht auf. Das heißt, dass der Rahmen hohe Lasten aufnehmen kann und sich unter Hitzeeinwirkung weniger stark verzieht.

Der Rahmen des vorgeschlagenen Photovoltaikmoduls kann beispielsweise eine rechteckige Form aufweisen. In diesem Fall weist er mindestens vier Profile auf, die in einer Ebene liegend jeweils rechtwinklig zueinander angeordnet sind. Die Profile können miteinander verschweißt oder auf andere Art miteinander verbunden sein, um einen formsteifen Rahmen auszubilden. Sofern der Rahmen mehrteilig ausgeführt ist, beispielsweise ein erstes Rahmenteil zur Lastaufnahme und ein zweites Rahmenteil zur Kantenabdeckung aufweist, werden mindestens zweimal vier, das heißt insgesamt mindestens acht Profile zur Ausbildung der beiden Rahmenteile benötigt.

Bevorzugt ist zwischen dem Rahmen bzw. einem Rahmenteil des Rahmens und dem Photovoltaikelement mindestens eine, vorzugsweise umlaufende, Dichtung eingelegt. Die mindestens eine Dichtung verhindert das Eindringen von Feuchtigkeit in den Hohlraum des Photovoltaikmoduls. Vorteilhafterweise ist das Photovoltaikmodul über beidseits angeordnete Dichtungen im ein- oder mehrteilig ausgeführten Rahmen gehalten. Die beidseits angeordneten Dichtungen verhindern nicht nur das Eindringen von Feuchtigkeit, sondern ermöglichen eine klemmende Befestigung des Photovoltaikelements im Rahmen, ohne dass zu große Spannungen in das Element eingebracht werden.

Ferner bevorzugt ist die Platte des Photovoltaikmoduls mit dem Rahmen über eine Schraub-, Niet-, Klemm-, Press-, Schweiß- und/oder Klebeverbindung verbunden.

Die Verbindung kann demnach über mechanische Befestigungsmittel, wie beispielsweise Schrauben, Nieten oder Klammern, hergestellt sein. Dabei können auch weitere Befestigungsmittel, wie beispielsweise Befestigungswinkel und/oder - laschen zum Einsatz gelangen. Durch bereichsweises Umformen des Rahmens kann insbesondere eine Klemm- oder Pressverbindung zwischen Platte und Rahmen hergestellt werden. Wird die Klemm- oder Pressverbindung umlaufend ausgeführt, kann hierüber zugleich eine Abdichtung erzielt werden. Um erhöhten Dichtheitsanforderungen zu genügen, kann - alternativ oder ergänzend - die Verbindung der Platte mit dem Rahmen über eine Schweiß- oder Klebeverbindung hergestellt werden, die zu einem Stoffschluss zwischen Platte und Rahmen führt.

Des Weiteren bevorzugt ist bzw. sind der Rahmen und/oder die Platte aus einem nicht brennbaren Werkstoff, beispielsweise aus Metall, gefertigt. Durch diese Maßnahme kann das Brandverhalten des Photovoltaikmoduls weiter verbessert werden. Wird bzw. werden der Rahmen und/oder die Platte aus Metall gefertigt, begünstigt dies im Brandfall eine gleichmäßige Temperaturverteilung, da Metalle eine hohe Wärmeleitfähigkeit aufweisen.

Weiterhin wird vorgeschlagen, dass das mehrschichtig aufgebaute Photovoltaikelement eine Photovoltaikschicht umfasst, die zwischen mindestens zwei weiteren Schichten angeordnet ist, von denen zumindest eine Schicht eine Glasscheibe und/oder eine Folie ist. Das Photovoltaikelement, das zur Wandlung von Sonnenlicht in elektrische Energie benötigt wird, ist durch die weiteren Schichten vor äußeren Einwirkungen geschützt. Bei der Glasscheibe und/oder Folie handelt es sich vorzugsweise um eine Schicht, die außenliegend angeordnet und für Sonnenlicht durchlässig ist. Dadurch ist sichergestellt, dass das Sonnenlicht bis an die Photovoltaikschicht gelangt.

Gemäß einer bevorzugten Ausführungsform der Erfindung ist die Photovoltaikschicht zwischen zwei Folien angeordnet, wobei zumindest die außenliegende Folie von einer Glasscheibe abgedeckt ist. Die Glasscheibe schützt die dahinterliegende Photovoltaikschicht einschließlich der Folien vor äußeren Einwirkungen. Auf eine innenliegende weitere Glasscheibe zum Schutz der Photovoltaikschicht kann verzichtet werden, da der Rahmen rückseitig mit der den Hohlraum schließenden Platte verbunden ist. Diese übernimmt dann die Schutzfunktion einer weiteren Glasscheibe. Da vorzugsweise die Platte weniger als eine Glasscheibe wiegt, kann auf diese Weise Gewicht eingespart werden.

Da der bevorzugte Anwendungsbereich eines erfindungsgemäßen Photovoltaikmoduls ein Fassadensystem ist, wird ferner ein Fassadensystem zur Ausbildung einer vorgehängten hinterlüfteten Fassade vorgeschlagen, das mindestens ein erfindungsgemäßes Photovoltaikmodul umfasst. Mit Hilfe des Photovoltaikmoduls können die an Fassaden gestellten Brandschutzanforderungen erfüllt werden. Dies haben mehrere Brandversuche ergeben, die unterschiedliche Brandereignisse im Hinblick auf den Ort der Entstehung eines Feuers an oder in einem Gebäude sowie eine mögliche Brandausbreitung zum Gegenstand hatten.

In Weiterbildung der Erfindung wird vorgeschlagen, dass das Fassadensystem eine Unterkonstruktion zur Befestigung des Photovoltaikmoduls an einem bauseitigen Untergrund umfasst. Mit Hilfe der Unterkonstruktion kann zwischen dem Photovoltaikmodul und dem bauseitigen Untergrund eine Luftschicht ausgebildet werden, die zur Hinterlüftung der Fassade einsetzbar ist.

Des Weiteren wird eine vorgehängte hinterlüftete Fassade vorgeschlagen, die aus einem erfindungsgemäßen Fassadensystem ausgebildet ist. Das Photovoltaikelement übernimmt in dieser Fassade die Funktion eines Fassadenelements, das in der Weise an einem bauseitigen Untergrund befestigt ist, dass eine Hinterlüftung des Fassadenelements bzw. des Photovoltaikmoduls sichergestellt ist. Die Befestigung des Photovoltaikmoduls am bauseitigen Untergrund erfolgt vorzugsweise mit Hilfe einer Unterkonstruktion, die das Photovoltaikmodul auf Abstand zum bauseitigen Untergrund hält.

Darüber hinaus wird die Verwendung eines erfindungsgemäßen Photovoltaikmoduls als Fassadenelement in einem Fassadensystem zur Ausbildung einer vorgehängten hinterlüfteten Fassade vorgeschlagen. Die vorgeschlagene Verwendung wird durch das verbesserte Brandverhalten des erfindungsgemäßen Photovoltaikmoduls ermöglicht. Das Photovoltaikmodul wird dabei vorzugsweise mittels einer Unterkonstruktion an einem bauseitigen Untergrund befestigt. Die vorgeschlagene Verwendung schließt andere Verwendungen nicht aus. Insbesondere kann das erfindungsgemäße Photovoltaikmodul auch frei oder auf Dächern aufgestellt werden.

Bevorzugte Ausführungsformen der Erfindung werden nachfolgend anhand der beigefügten Zeichnungen näher erläutert. Diese zeigen:
Fig. 1 einen angeschnittenen Horizontalschnitt durch ein erstes erfindungsgemäßes Photovoltaikmodul,
Fig. 2 einen angeschnittenen Horizontalschnitt durch ein zweites erfindungsgemäßes Photovoltaikmodul,
Fig. 3 einen angeschnittenen Horizontalschnitt durch ein drittes erfindungsgemäßes Photovoltaikmodul,
Fig. 4 einen Horizontalschnitt durch ein Fassadensystem mit einem erfindungsgemäßen Photovoltaikmodul als Fassadenelement und
Fig. 5 einen Vertikalschnitt durch das Fassadensystem der Figur 4.

### Ausführliche Beschreibung der Zeichnungen

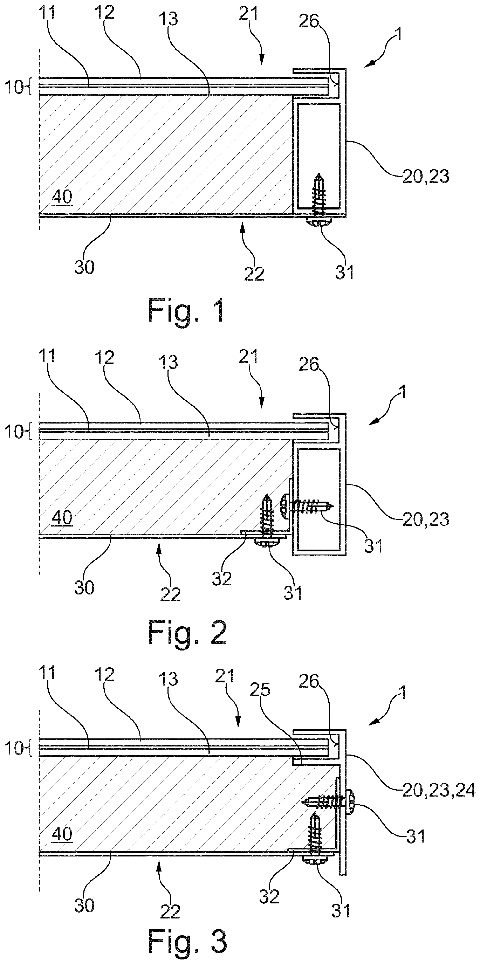

Das in der Figur 1 dargestellte erfindungsgemäße Photovoltaikmodul 1 weist ein verbessertes Brandverhalten auf und ist daher insbesondere als Fassadenelement in einem Fassadensystem 2 zur Ausbildung einer vorgehängten hinterlüfteten Fassade einsetzbar.

Das Photovoltaikmodul 1 der Figur 1 weist ein Photovoltaikelement 10 und einen Rahmen 20 auf, der das Photovoltaikelement 10 umlaufend einfasst. Das Photovoltaikelement 10 ist mehrschichtig aufgebaut. Eine erste Schicht bildet eine Photovoltaikschicht 11 aus, die zwischen weiteren Schichten 12, 13 angeordnet ist. Bei den weiteren Schichten 12, 13 kann es sich insbesondere um eine Glasscheibe und/oder eine Folie handeln. In der Figur 1 liegen an der Photovoltaikschicht 11 beidseits jeweils eine Folie (nicht dargestellt) und eine Glasscheibe an, wobei die in der Figur 1 untenliegend dargestellte Glasscheibe (Schicht 13) verzichtbar ist.

Der Rahmen 20 des in der Figur 1 dargestellten Photovoltaikmoduls 1 ist aus Profilen 23 gefertigt, die als Kammerprofile ausgeführt sind. Um das Photovoltaikelement 10 umlaufend einzufassen, weisen die Profile 23 an einem ersten Ende, das eine Vorderseite 21 des Rahmens 20 definiert, eine innenseitig angeordnete umlaufende Nut 26 auf. Andernends, das heißt an einer Rückseite 22 des Rahmens 20, liegt eine Platte 30 an, die gemeinsam mit dem Photovoltaikelement 10 und dem Rahmen 20 einen Hohlraum 40 umschließt. Der Hohlraum 40 ist mit Luft gefüllt. Im Brandfall trägt die Luft im Hohlraum 40 zu einer gleichmäßigen Temperaturverteilung bei, so dass insbesondere die als Glasscheibe ausgeführte Schicht 12 des Photovoltaikelements 10 weniger stark beansprucht wird. Die Glasscheibe und damit das Photovoltaikmodul 1 hält somit der Hitze über einen längeren Zeitraum stand.

Eine gleichmäßige Temperaturverteilung im Brandfall wird zudem durch die rückseitig angeordnete Platte 30 gefördert. Dies gilt insbesondere dann, wenn die Platte 30 aus einem Werkstoff gefertigt ist, der eine hohe Wärmeleitfähigkeit aufweist. Zudem bewirkt die Platte 30 eine Aussteifung des Rahmens 20, der sich dadurch unter Hitzeeinwirkung weniger stark bis gar nicht verzieht.

Die Platte 30 ist mit dem Rahmen 20 mechanisch verbunden, und zwar verschraubt. Das heißt, dass Befestigungsmittel 31 in Form von Schrauben vorgesehen sind, mittels welcher die Platte 30 am Rahmen 20 festgelegt ist. Andere Befestigungsmittel, wie beispielsweise Nieten, können ebenfalls eingesetzt werden. Darüber hinaus kann auch eine andere Verbindungsart, beispielsweise eine Klemm-, Schweiß- oder Klebeverbindung gewählt werden.

Der Figur 2 ist ein weiteres erfindungsgemäßes Photovoltaikmodul 1 zu entnehmen. Dieses unterscheidet sich von dem der Figur 1 insbesondere dadurch, dass die Platte 30 nicht direkt, sondern indirekt über einen Winkel als weiteres Befestigungsmittel 32 am Rahmen 20 befestigt ist. Der Winkel 32 wird einerseits mit der Platte 30, andererseits mit dem Rahmen 20 verschraubt. Der Winkel 32 ermöglicht eine gegenüber der Rückseite 22 des Rahmens 20 zurückgesetzte Anordnung der Platte 30.

Der Figur 3 ist ebenfalls ein erfindungsgemäßes Photovoltaikmodul 1 zu entnehmen. Im Unterschied zu den Modulen der Figuren 1 und 2 ist hier der Rahmen 20 aus Profilen 23 gefertigt, die nicht als Kammerprofile, sondern als offene Profile ausgeführt sind. Zur Ausbildung einer Nut 26 sowie zur Aussteifung des Rahmens 20 weisen die Profile 23 jeweils mindestens zwei winklig zueinander liegende Schenkel 24, 25 auf. Am Schenkel 24, der senkrecht zum Photovoltaikelement 10 ausgerichtet ist, ist mit Hilfe von Befestigungsmitteln 31, 32 in Form von Schrauben und einem Winkel die Platte 30 befestigt.

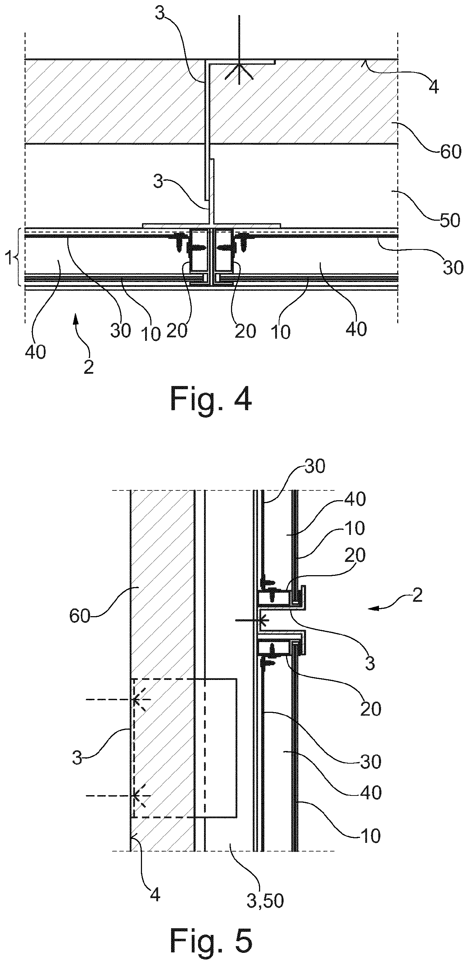

Figur 4 zeigt einen Horizontalschnitt durch ein erfindungsgemäßes Fassadensystem 2 im Stoßbereich zweier benachbarter erfindungsgemäßer Photovoltaikmodule 1. In dem Fassadensystem 2 dienen die Photovoltaikmodule 1 als Fassadenelement. Analog einem Fassadenelement sind die Photovoltaikmodule 1 über eine Unterkonstruktion 3 in der Weise an einem bauseitigen Untergrund 4 befestigt, dass unter Ausbildung einer Luftschicht 50 eine Dämmschicht 60 auf dem bauseitigen Untergrund 4 angeordnet werden kann. Die Luftschicht 50 dient der Hinterlüftung der Fassade. Mit Hilfe des Fassadensystems 2 kann demnach insbesondere eine vorgehängte hinterlüftete Fassade ausgebildet werden. Die Unterkonstruktion 3 zur Befestigung der Photovoltaikmodule 1 am bauseitigen Untergrund 3 ist vorliegend mehrteilig ausgeführt. Sie umfasst ein T-förmiges Halteprofil, das im Stoßbereich der beiden Photovoltaikmodule 1 angeordnet ist und vertikal verläuft. Ferner einen L-förmigen Wandhalter, mittels dessen das T-förmige Halteprofil am bauseitigen Untergrund 4 befestigt ist. Wie der Figur 5 zu entnehmen ist, kann die Unterkonstruktion 3 zudem ein U-förmiges Tragprofil umfassen, das horizontal verläuft. Es trägt die darüberliegenden Photovoltaikelemente 1 und dient den darunterliegenden Photovoltaikelementen 1 als Abdeckung. Die U-Form des Tragprofils ermöglicht eine zurückliegende Verschraubung mit dem T-förmigen Halteprofil.

### Bezugszeichenliste

- 1: Photovoltaikmodul
- 2: Fassadensystem
- 3: Unterkonstruktion
- 4: Untergrund

- 10: Photovoltaikelement
- 11: Photovoltaikschicht
- 12: Schicht
- 13: Schicht

- 20: Rahmen
- 21: Vorderseite
- 22: Rückseite
- 23: Profil
- 24: Schenkel
- 25: Schenkel
- 26: Nut

- 30: Platte
- 31: Befestigungsmittel, Schraube
- 32: Befestigungsmittel, Winkel

- 40: Hohlraum

- 50: Luftschicht

- 60: Dämmschicht

## Patentansprüche

1. Photovoltaikmodul (1) für ein Fassadensystem (2) zur Ausbildung einer vorgehängten hinterlüfteten Fassade, umfassend
- ein Photovoltaikelement (10) mit einem mehrschichtigen Aufbau sowie
- einen Rahmen (20) zur Aufnahme des Photovoltaikelements (10), der eine Vorderseite (21) und eine Rückseite (22) aufweist,
wobei im Bereich der Vorderseite (21) des Rahmens (20) das Photovoltaikelement (10) aufgenommen ist und im Bereich der Rückseite (22) des Rahmens (20) eine Platte (30) angeordnet und mit dem Rahmen (20) verbunden ist, so dass das Photovoltaikelement (10), der Rahmen (20) und die Platte (30) gemeinsam einen Hohlraum (40) umschließen.

2. Photovoltaikmodul (1) nach Anspruch 1,
**dadurch gekennzeichnet, dass** der Rahmen (20) eine Tiefe (T₂) aufweist, die größer als eine Tiefe (T₁) des Photovoltaikelements (10) ist.

3. Photovoltaikmodul (1) nach Anspruch 1 oder 2,
**dadurch gekennzeichnet, dass** das Photovoltaikelement (10) durch den Rahmen (20) umlaufend eingefasst ist.

4. Photovoltaikmodul (1) nach einem der vorhergehenden Ansprüche,
**dadurch gekennzeichnet, dass** der Rahmen (20) aus Profilen (23) gefertigt ist, die als Kammerprofile oder als offene Profile mit mindestens zwei winklig zueinander angeordneten Schenkeln (24, 25) ausgeführt sind.

5. Photovoltaikmodul (1) nach einem der vorhergehenden Ansprüche,
**dadurch gekennzeichnet, dass** zwischen dem Rahmen (20) bzw. einem Rahmenteil des Rahmens (20) und dem Photovoltaikelement (10) mindestens eine, vorzugsweise umlaufende, Dichtung eingelegt ist.

6. Photovoltaikmodul (1) nach einem der vorhergehenden Ansprüche,
**dadurch gekennzeichnet, dass** die Platte (30) mit dem Rahmen (20) über eine Schraub-, Niet-, Klemm-, Press-, Schweiß- und/oder Klebeverbindung verbunden ist.

7. Photovoltaikmodul (1) nach einem der vorhergehenden Ansprüche,
**dadurch gekennzeichnet, dass** der Rahmen (20) und/oder die Platte (30) aus einem nicht brennbaren Werkstoff, beispielsweise aus Metall, gefertigt ist bzw. sind.

8. Photovoltaikmodul (1) nach einem der vorhergehenden Ansprüche,
**dadurch gekennzeichnet, dass** das Photovoltaikelement (10) eine Photovoltaikschicht (11) umfasst, die zwischen mindestens zwei weiteren Schichten (12, 13) angeordnet ist, von denen zumindest eine Schicht (12, 13) eine Glasscheibe und/oder eine Folie ist.

9. Photovoltaikmodul (1) nach Anspruch 8,
**dadurch gekennzeichnet, dass** die Photovoltaikschicht (11) zwischen zwei Folien angeordnet ist, wobei zumindest die außenliegende Folie von einer Glasscheibe abgedeckt ist.

10. Fassadensystem (2) zur Ausbildung einer vorgehängten hinterlüfteten Fassade, umfassend mindestens ein Photovoltaikmodul (1) nach einem der vorhergehenden Ansprüche.

11. Fassadensystem (2) nach Anspruch 10,
**dadurch gekennzeichnet, dass** das Fassadensystem (2) eine Unterkonstruktion (3) zur Befestigung des Photovoltaikmoduls (1) an einem bauseitigen Untergrund (4) umfasst.

12. Vorgehängte hinterlüftete Fassade, die aus einem Fassadensystem (2) nach Anspruch 10 oder 11 ausgebildet ist.

13. Verwendung eines Photovoltaikmoduls (1) nach einem der Ansprüche 1 bis 9 als Fassadenelement in einem Fassadensystem (2) zur Ausbildung einer vorgehängten hinterlüfteten Fassade, wobei vorzugsweise das Photovoltaikmodul (1) mittels einer Unterkonstruktion (3) an einem bauseitigen Untergrund (4) befestigt wird.
